# EUROPÄISCHE PATENTANMELDUNG

(11) **EP 0 586 742 A1**
(43) Veröffentlichungstag der Anmeldung: **16.03.1994**
(21) Anmeldenummer: 92121309.6
(22) Anmeldetag: 15.12.1992
(51) Int. Cl.: G01B 3/00, G01B 7/12

(54) **Messvorrichtung zur Überprüfung von Abstandsänderungen**

(30) Priorität: 11.09.1992 DE 9212273 U
(71) Anmelder: Künz, Werner, D-35440 Linden (DE)
(72) Erfinder: Künz, Werner, D-35440 Linden (DE)
(74) Vertreter: Katscher, Helmut, Dipl.-Ing.

(57) **Zusammenfassung**

Die Meßvorrichtung weist ein in einem zylindrischen Gehäuse (10) verschiebares Tastelement (12) und gegenüberliegend ein ortsfestes Anlageelement (13) sowie einen induktiven Meßwertaufnehmer (17) auf. Das Tastelement (12) ist mit einem im Gehäuse (10) gegen den Druck von Federn (23,23') verschiebbaren Träger (16) kraftschlüssig verbunden. Auf das Tastelement (12) wirken weitere Andruckfedern (24-24'''), deren Federkonstante größer als die der Federn (23,23') bemessen ist. Wenn der normale Meßhub beim Eindrücken des Tastelementes (12) durch Anschlagen des Trägers (16) erschöpft ist, löst sich bei weiterer Kraftausübung auf das Tastelement (12) dessen kraftschlüssige Verbindung mit dem Träger (16) und ermöglicht einen zusätzlichen Freihub entgegen dem Druck der Andruckfedern (24-24''').. Auf diese Weise werden Beschädigungen der Meßvorrichtung verhindert. Letztere eignet sich besonders zur Überprüfung der Schenkelatmung von Kurbelwellen.

## Beschreibung

Die Erfindung betrifft eine Meßvorrichtung zur Überprüfung von Abstandsänderungen, mit einem zylindrischen Gehäuse, einem in demselben axial und federnd verschiebbaren Tastelement, einem diesem gegenüberliegend am Gehäuse ortsfest angeordneten Anlageelement und einem induktiven Meßwertaufnehmer innerhalb des Gehäuses.

Zur Überprüfung von in Motoren, Kompressoren, Pumpen u. dgl. montierten Kurbelwellen, Nockenwellen und anderen Werkstücken auf fluchtende Lager - und Lagerzapfenachsen und sonstige Fehler wird die Differenz der Meßwerte zweier Wellenstellungen ermittelt, die als Kurbelwellenschenkelatmung bezeichnet wird. Dazu sind rein mechanische Prüfgeräte mit einer feststehenden und einer beweglichen Meßspitze und einer Meßuhr bekannt, die zwischen die Kurbelwangen in vorher anzubringende Körnerpunkte eingespannt werden. Beim Drehen der Kurbelwelle von Hand wird die Zeigerabweichung auf der Meßuhr verfolgt und die Kurbelschenkelatmung bei verschiedenen Kurbelstellungen abgelesen und in ein Prüfblatt eingetragen.

Aus der DE - 32 11 118 A1 ist ein Taststangenmeßgerät mit einem Gehäuse, einer Taststange, einem Tastelement und einer digitalen Anzeigeeinheit bekannt. Taststange und Tastelement treiben je einen mit Linienrastern versehenen Maßstab an, und die Maßstäbe erzeugen in Verbindung mit Sensoreinrichtungen elektrische Impulsfolgen, die der Bewegung des Linienrasters entsprechen. Die Impulsfolgen werden einer Signalverarbeitungseinrichtung aufgeschaltet, in der sie addiert bzw. subtrahiert werden. Durch die Aufteilung des gesamten Meßbereiches auf zwei Maßstäbe sowie die Möglichkeit, daß sich die beiden Maßstäbe parallel aneinander vorbeibewegen können, wird eine sehr verkürzte Bauweise dieses bekannten Meßgerätes erreicht.

Aus der DE - OS 28 32 038 ist ein nach dem Abbeschen Prinzip gebautes Linearmikrometer bekannt. Dieses weist eine in ein Gehäuse eintauchende Meßpinole und einen innerhalb des Gehäuses ortsfest angeordneten Maßstab sowie eine diesem zugordnete, mit der Meßpinole gekoppelte Ableseeinrichtung zur digitalen elektrischen Wegerfassung auf. Die Meßpinole ist aus jeder beliebigen Stellung heraus mittels einer Schnellverstellung verstellbar, wobei die Feinverstellung über einen Schraubentrieb nicht beeinflußt wird. Zur Schnellverstellung der Pinole ist an derselben ein Arretiergetriebe befestigt, und zur Feinverstellung ist ein damit gekoppeltes Feingewinde mit Mutter vorgesehen. Als Koppelung dienen zwei Stangen, welche im Gehäuse längsverschiebbar gelagert sind und unter dem Druck von Federn an der Feinstellvorrichtung anliegen, wobei die Stangen mit dem durch Druck lösbaren Arretiergetriebe zusammenwirken.

Schließlich ist aus der DE - 40 23 504 A1 eine Meßvorrichtung zum Einbau in einen Träger bekannt, die aus einem ortsfesten Meßglied und einem mit veränderbarem Abstand davon angeordneten, sich auf der Meßoberfläche abstützenden Tastelement besteht. Der Abstand zwischen Meßglied und Tastelement bildet dabei eine Meßgröße. Das Meßglied und das Tastelement sind mit einem Grundkörper verbunden, und das Meßglied ist als elektrischer Feldträger und das Tastelement als Ablenkkörper ausgebildet. Das bekannte Meßgerät ist kleinbauend und liefert ohne großen Aufwand ein elektrisches Meßsignal, welches in Meßrechnern verwertet oder für statistische Zwecke verwendet werden kann. Im einzelnen weist diese Meßvorrichtung einen plattenförmigen Grundkörper auf, der zwei Induktionsspulen mit Spulenkörpern aufnimmt. Beide Induktionsspulen sind zu einer sogenannten Differentialdrossel verknüpft. Über den beiden Spulenkörpern befindet sich ein Doppelhebel, der über einen fest in die Grundplatte eingesetzten Federsteg schwenkbar gelagert bzw. als Wippe ausgebildet ist. Dieser Doppelhebel bildet gleichzeitig den als Anker wirkenden Ablenkkörper für beide Induktionsspulen. An einem Ende des Doppelhebels ist ein als kugelförmiger Abschnitt ausgebildetes Tastelement befestigt. Der Doppelhebel weist an beiden Enden den gleichen Abstand von den Induktionsspulen auf, was bei einer entsprechenden Differentialdrossel dem Meßsignal "Null" entspricht. Durch eine Schrägstellung des Doppelhebels kann eine Vorspannung über den gesamten Meßbereich erzeugt werden, der dementsprechend dann von einem positiven bis hin zu einem negativen Meßsignal reicht. Der Meßhub bei diesen bekannten Meßvorrichtungen ist verhältnismäßig begrenzt, und so sind bereits beim Einsetzen der Geräte zwischen die Kurbelwangen Beschädigungen nicht auszuschließen, wenn dazu das bewegliche Tastelement oder die Meßspitze in das Gehäuse gedrückt wird.

Der Erfindung liegt die Aufgabe zugrunde, eine Meßvorrichtung der eingangs genannten Art zu schaffen, die bei geringen Abmessungen und hoher Genauigkeit ein problemloses Einführen ohne die Gefahr einer Beschädigung ermöglicht und auch bei größeren Meßhüben ein einwandfreies Messen gewährleistet.

Gemäß der Erfindung wird diese Aufgabe mit den kennzeichnenden Merkmalen des Anspruches 1 gelöst. Auf diese Weise ist sichergestellt, daß nach Ausschöpfen des Normalhubes des Tastelementes noch ein Freihub automatisch in Kraft tritt, der eine Zerstörung des Tastelementes, beispielsweise des empfindlichen Meßwertaufnehmer - Ablenkelementes, weitgehend verhindert. Mit Vorteil sind dabei zwei auf den Träger und vier auf das Tastelement direkt wirkende Federn vorgesehen, wobei sämtliche Federn am Innenumfang des Gehäuses angeordnet sind und sich die beiden Federn mit der kleineren Federkonstante diametral und die vier Federn mit der größeren Federkonstante jeweils paarweise gegenüberliegen.

Weitere Ausgestaltungen der Erfindung sind den Unteransprüchen vier bis sieben entnehmbar.

Aus der nachfolgenden Beschreibung eines bevorzugten Ausführungsbeispiels, das in der Zeichnung schematisch dargestellt ist, sind weitere Einzelheiten entnehmbar.

Es zeigen
- Fig. 1: einen Längsschnitt durch die erfindungsgemäße Meßvorrichtung,
- Fig. 2: einen zweiten, um 90° gegenüber Fig.1 gedrehten Längsschnitt durch die erfindungsgemäße Meßvorrichtung, und
- Fig. 3: eine geschnittene Draufsicht.

Die Meßvorrichtung weist ein zylindrisches Gehäuse 10 auf, das aus Gründen einer erleichterten Montage und Wartung zweiteilig ausgeführt ist. Im Unterteil 10' ist in einer Bohrung 11 ein Tastelement 12 verschiebbar geführt. Auf der diesem gegenüberliegenden Seite des Gehäuses 10 ist im Oberteil 10'' desselben ein Anlageelement 13 lösbar befestigt, beispielsweise eingeschraubt. Das Tastelement 12 ist an seinem gehäuseseitigen Ende mit einer angeformten Scheibe 14 versehen, welche in einen Sprengring 15 kraftschlüssig eingespannt ist. Der Sprengring 15 ist in einen zylindrischen Träger 16 eingesetzt, der mit seiner Außenfläche an der Innenwand des Oberteils 10'' des Gehäuses 10 anliegt. Auf dem Träger 16 ist ein induktiver Wegaufnehmer 17 mit hier nicht gezeigter(n) Induktionsspule(n) sowie Spulenkörper(n) angeordnet. Der induktive Wegaufnehmer 17 ist an sich bekannt und beispielsweise in der gattungsbildenden DE 40 23 504 A1 beschrieben. Er weist einen kalottenförmigen Tastkopf 18 aus nicht magnetisierbarem Werkstoff auf, der beweglich gelagert ist und an seiner Planfläche mit einer als Anker wirkenden Platte versehen ist. Beim Anlegen einer hochfrequenten Wechselspannung an die Induktionsspule(n) ändert sich deren Induktivität mit dem Abstand des mit der Platte verbundenen Tastkopfes 18, diese Änderung wird in gleichfalls bekannter Weise angezeigt oder weiterverarbeitet. Eine Aussparung 19 im Träger 16 sowie ein Ansatz 20 am Oberteil 10'' des Gehäuses 10 dienen der Führung von Leitungen 21 für die Induktionsspule. Der Tastkopf 18 liegt mit seiner gewölbten Fläche an einer in den Oberteil 10'' des Gehäuses 10 eingesetzten Anschlagscheibe 22 an, die auch das Anlageelement 13 aufnimmt und besonders plan ausgebildet ist.

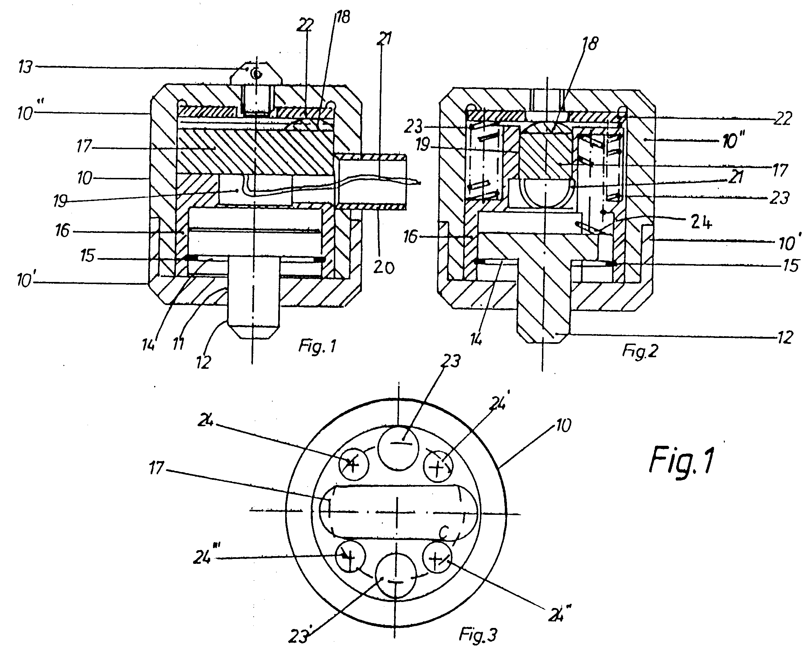

Wie aus Fig. 2 in Verbindung mit Fig. 3 hervorgeht, wirken auf den Träger 16 zwei Federn 23,23', die am Innenumfang des Gehäuses 10 einander diametral gegenüberliegen und sich außerdem an der Anschlagscheibe 22 abstützen. Vier weitere Andruckfedern 24-24''' liegen gleichfalls am Innnenumfang des Gehäuses 10 paarweise einander gegenüber. Diese Andruckfedern 24-24''' wirken direkt auf das Tastelement 12. Die Summe ihrer Federkonstanten ist größer als die Summe der Federkonstanten der Federn 23,23'.

Die Funktionweise der erfindungsgemäßen Meßvorrichtung ist wie folgt. Beim Einsetzen derselben zwischen die Wangen, beispielsweise einer Kurbelwelle, wird das Tastelement 12 in das Gehäuse 10 gedrückt und festgelegt, wobei größere Abstandsdifferenzen durch das austauschbare Anlageelement 13 ausgleichbar sind. Das Tastelement 12 führt dabei zusammen mit dem Träger 16 einen "Normalhub" aus, der durch den Anschlag des Trägers 16 an die Anschlagscheibe 22 begrenzt ist. Falls der Meßhub des Tastelementes 12 größer als derjenige des Trägers 16 ist, erfolgt automatisch ein "Freihub", der durch die Andruckfedern 24-24''' gewährleistet ist. Das Tastelement 12 löst sich mit seiner Scheibe 14 aus der kraftschlüssigen Verbindung mit dem Sprengring 15 und ist gegen die Kraft der Andruckfedern 24-24''' weiter in das Gehäuse 10 einschiebbar. Auf diese Weise werden Beschädigungen der Meßvorrichtung vermieden.

## Patentansprüche

1. Meßvorrichtung zur Überprüfung von Abstandsänderungen, mit einem zylindrischen Gehäuse, einem in demselben axial und federnd verschiebbaren Tastelement, einem diesem gegenüberliegend am Gehäuse ortsfest angeordneten Anlageelement und einem induktiven Meßwertaufnehmer innerhalb des Gehäuses, dadurch gekennzeichnet, daß das Tastelement (12) mit einem Träger (16) kraftschlüssig verbunden ist, welcher mit dem Tastelement (12) gegen den Druck wenigstens einer auf dem Träger (16) wirkenden ersten Feder (23,23') im Gehäuse (10) verschiebbar ist und mindestens eine weitere Andruckfeder (24-24''') das Tastelement (12) direkt beaufschlagt, deren Federkonstante größer als diejenige der ersten Feder (23,23') bemessen ist, und daß der induktive Meßwertaufnehmer (17) sowie das Tastelement (12) unter Einhaltung des Abbeschen Prinzips im Gehäuse (10) angeordnet sind.

2. Meßvorrichtung nach Anspruch 1, dadurch gekennzeichnet, daß zwei auf dem Träger (16) wirkende Federn (23,23') vorgesehen sind, die am Innenumfang des Gehäuses (10) einander diametral gegenüberliegen.

3. Meßvorrichtung nach Anspruch 1, dadurch gekennzeichnet, daß vier auf das Tastelement (12) direkt wirkende Andruckfedern (24-24''') vorgesehen sind, die am Innenumfang des Gehäuses (10) paarweise einander gegenüberliegen.

4. Meßvorrichtung nach Anspruch 1, dadurch gekennzeichnet, daß das Tastelement (12) mittels eines Sprengringes (15) mit dem Träger (16) verbunden ist.

5. Meßvorrichtung nach Anspruch 1, dadurch gekennzeichnet, daß das Anlageelement (13) austauschbar am Gehäuse (10) befestigt ist.

6. Meßvorrichtung nach Anspruch 1, dadurch gekennzeichnet, daß in das Gehäuse (10) eine Anschlagscheibe (22) eingesetzt ist, an der sich die Federn (23,23') und ein Tastkopf (18) des induktiven Wegaufnehmers (17) abstützen.

7. Meßvorrichtung nach einem oder mehreren der vorhergehenden Ansprüche, dadurch gekennzeichnet, daß das Gehäuse (10) zweiteilig ausgebildet ist.
